# EUROPEAN PATENT APPLICATION

(11) **EP 4 740 738 A1**
(43) Date of publication of application: **13.05.2026**
(21) Application number: 24211808.1
(22) Date of filing: 08.11.2024
(51) Int. Cl.: A21D 13/36, A21D 13/38, A23G 3/54, A23G 3/56

(54) **WAFER FILLED WITH A FILLING COMPRISING A COATED FOOD ACID**

(71) Applicant: Astra Sweets, 2300 Turnhout (BE)
(72) Inventor: Pellens, Emilie Rita Lieven, 2310 Rijkevorsel (BE); De Poorter, Adrianus, 2320 Hoogstraten (BE)
(74) Representative: Ipsilon Belgium

(57) **Abstract**

A filled wafer (10) comprising a filling (20), the filling (20) comprises one or more food acids, at least one of the one or more food acids is a coated food acid or a co-crystal of food acids.

## Description

### Technical Field

The present invention generally relates to a filled wafer comprising a filling and to a method to provide the filled wafer.

### Background

Filled wafer comprising a filling is well-known in the art, well-known one, e.g. Flying saucers or UFOs, being small spheroidal capsule of sherbet-filled eatable paper.

In terms of wafer fillings, in addition to traditional sherbets, fillings have evolved into little balls (known as pearls) and powders (with fruity, sour or cola flavors). Among these products, the filled wafers with sour flavors are very popular with consumers. Whether it is melting the filled wafers in the mouth or biting into the wafer immediately, the sour and sweet surprise brought by the filling is enjoyable. Consumers are satisfied with the impact of the sour shock and how it tingles in their mouth.

Sourness has a crucial impact on the overall flavor profile. A complex combination of acid release peaks, ideally with an instant sharp release peak immediately upon contact with saliva followed by a more widespread release peak, creates sourness and flavor complexity. The instant sharp release peak gives the consumer a burst of sourness at the first bite. Thereafter, a lingering sourness blended with sweetness enhances the sourness perception. Most importantly, a carefully selected food acid blend is necessary to create a balance between sourness and sweetness that satisfies the palate.

During transportation and storage, unavoidable degradation of product quality shortens the shelf life of the product and ruins the consumer experience. The delicate design and thoughts of the manufacturer in terms of "mouth feelings" or "eating experience" cannot be fully conveyed to the consumers.

Furthermore, EU and other national food regulations become more strict in terms of allowable ingredients, and/or amounts of allowable ingredients in a food product.

Overall, there is a need for improved filling ingredients for filled wafers that achieve high moisture stability while providing a complex acidity profile upon consumption.

### Summary

According to the first aspect of the invention, a filled wafer is provided. The filled wafer comprises a filling. The filling comprises one or more food acids, at least one of the one or more food acids is a coated food acid or a co-crystal of food acids.

Flying saucers or UFOs or Zure ouwels (in Flemish) is a major example of such filled wafer, which is small spheroidal capsule of filled unleavened food sheet casing. Each filled wafer comprises an unleavened food sheet casing and the casing encloses a filling. Unleavened food sheet, i.e. unrisen food sheet, also referred to as "eatable paper", is a thin sheet of baked dough made without leaven, such as yeast and baking powder. The ingredients to make the unleavened food sheet may include water, starch, optionally colorants, optionally aromas, preferably sugarless, and other additives. The thickness of the unleavened food sheet may range from 0.25 mm to 2.5 mm, preferably from 0.5 mm to 2 mm, even preferably from 0.9 mm to 1.1 mm, e.g. 1 mm. The unleavened food sheets, also referred to as "wafer", are generally inelastic and crumbly. These wafers may not be confused with wafers made from flour, starch, sugar, baking powder, and leavening agents, which may be called waffles. The latter baked batter or dough provides an elastic, ductile, sweet baked product that behaves differently from unleavened food sheet or the "wafer".

The casing of the filled wafer may comprise more than one unleavened food sheets, e.g. two, three, four or oven more. Preferably, the casing of the filled wafer is provided by two unleavened food sheets.

The filling can be but not limited to in powder form, in ball form, and in sherbet form. Preferably, the filling is powder with a certain particle size distribution, such as at least 95 % of the analyzed particles have a size smaller than 3500 µm. The particle size distribution can be single modal, bi-modal or multiple-modal.

The filling may comprise one food acid or the filling may comprise more than one food acids.

At least one of the food acids can be a coated food acid or a co-crystal of food acids, and the remaining food acid(s) can be food acids without further treatment, such as coating or co-crystallization. Examples of food acid may comprise, but not limited to, citric acid, malic acid, fumaric acid, adipic acid, tartaric acid and acetic acid. Food acids are chemical compounds that impart a sour taste, flavor or tartness to food and they fit for human or animal consumption.

Coated food acids, also referred to as encapsulated food acids, are acids coated with fat, emulsifiers (e.g. mono- and diglycerides of fatty acids E 471), natural waxes (e.g. carnauba wax, beeswax, candelilla wax), synthetic waxes (e.g. paraffin), gums (e.g. Arabic), soluble fibers (e.g. inulin) or with one or more salts of the food acid. Salts of the food acid may comprise sodium salts, magnesium salts, calcium salts, potassium salts, zinc salts and so on.

A co-crystal of food acids refers to a crystalline single-phase material composed of two or more different molecular or ionic compounds in a stoichiometric ratio, which is neither a solvate nor a simple salt. A method for synthesizing co-crystals of malic acid and alkali metal hydrogen malate in the form of powders is described in detail in US 2022/0110352 A1.

It is very advantageous according to the invention that the filling may comprise one or more food acids, at least one of the one or more food acids is a coated food acid or a co-crystal of food acids. The composition of one food acid or preferably a combination of multiple food acids can introduce a desired acidity profile. The acidity profile may comprise a strong peak upfront due to the inclusion of tartaric acid, and can include a prolonged sour sensation due to the coated citric acid. This sourness and flavor complexity produce a burst of sourness and a lasting sourness with each bite, whether it is when the filled wafer melts in the mouth or when it is immediately bitten into. Combined with the sweetness, the filling can give the consumers a well-balanced sweetness and sourness, improving the overall mouthfeel and satisfying the palate. Moreover, the filling comprising one or more food acids can allow to reduce the amount of tartaric acid used, which is advantageous for making the production comply with new regulations on food additives in the EU or other countries.

The coated food acids, such as coated citric acid, have advantages over food acids. Coated food acids reduce reactivity with other ingredients in the filling, thereby preventing adverse reactions with other ingredients. The coated food acids reduces stickiness during processing and improves free-flowing powder properties, thereby allowing for better control of the particle size of the food acid powder, and to a certain extent, reducing the compositional inhomogeneity that may occur during transportation.

The co-crystal of food acids, such as co-crystal of malic acid and alkali metal hydrogen malate, have advantages over acids. The co-crystal of food acids have lower hygroscopicity and can impart a sour flavor that is very similar to that of malic acid. Lower hygroscopicity can effectively reduce the deliquescence of the added food acid during transportation, maintain control over the particle size and improve the homogeneity of the filling. The comprised coated food acids and/or co-crystal of food acids may effectively increase the shelf life of the final product.

According to some embodiments, the one or more food acids may comprise coated citric acid and/or coated malic acid.

In other words, the one or more food acids may comprise coated citric acid. Alternatively, the one or more food acids may comprise coated malic acid. Alternatively, the one or more food acids may comprise both coated citric acid and coated malic acid. Alternatively, the one or more food acids may comprise both coated citric acid and coated malic acid and other food acid(s) if there is/are any. Alternatively, the one or more food acids may comprise coated citric acid and other food acid(s) if there is/are any. Alternatively, the one or more food acids may comprise only coated malic acid and other food acid(s) if there is/are any.

According to some embodiments, the one or more food acids may comprise coated citric acid and coated malic acid.

In other words, the one or more food acids may comprise both coated citric acid and coated malic acid. Alternatively, the one or more food acids may comprise coated citric acid and coated malic acid and other food acid(s) if there is/are any.

According to some embodiments, the one or more food acids may comprise a co-crystal of food acids of malic acid and alkali metal malate and/or a co-crystal of food acids of malic acid and alkali metal hydrogen malate.

In other words, the one or more food acids may comprise a co-crystal of food acids of malic acid and alkali metal malate. Alternatively, the one or more food acids may comprise a co-crystal of food acids of malic acid and alkali metal hydrogen malate. Alternatively, the one or more food acids may comprise both a co-crystal of food acids of malic acid and alkali metal malate and a co-crystal of food acids of malic acid and alkali metal hydrogen malate. Alternatively, the one or more food acids may comprise a co-crystal of food acids of malic acid and alkali metal malate and other food acid(s) if there is/are any. Alternatively, the one or more food acids may comprise a co-crystal of food acids of malic acid and alkali metal hydrogen malate and other food acid(s) if there is/are any. Alternatively, the one or more food acids may comprise both a co-crystal of food acids of malic acid and alkali metal malate and a co-crystal of food acids of malic acid and alkali metal hydrogen malate and other food acid(s) if there is/are any.

According to some embodiments, the one or more food acids may comprise:
- a co-crystal of malic acid and sodium hydrogen malate; and/or
- a co-crystal of malic acid and bis(potassium hydrogen L-malate); and/or
- a co-crystal of dipotassium tetrahydrogen trimalate; and/or
- a co-crystal of malic acid and disodium malate.

The above listed co-crystals of food acids are preferably used in the filling. These co-crystals of food acids have advantages over other food acids, because they present excellent product stability in challenging conditions (such as high humidity and high temperature), they present quick-releasing, long-lasting sour flavors, they have superior powder flowability for uniform distribution and minimal dustiness and they have extremely low hygroscopicity and greater stability. Moreover, they deliver a perfect acidity profile and a fresh, clean mouthfeel.

According to some embodiments, the filling may comprise at least 0.5 wt.% of food acids chosen from the group consisting of coated food acids and co-crystal of food acids.

In the context of the invention, and unless explicitly mentioned differently, wt.% of a component is calculated as the weight of said component over the total weight of the filled wafer, that is the sum weight of the wafers and the filling, including said component. Unless otherwise explicitly indicated, when reference is made to a range, the range is to be understood inclusive.

More preferred, the filling comprises more than or equal to 0.5 wt.% and less than or equal to 60 wt.% of food acids chosen from the group consisting of coated food acids and co-crystal of food acids, such as in the range of 0.75 wt.% to 40 wt.%, such as in the range of 1 wt.% to 20 wt.%, even in the range of 1 wt.% to 10 wt.%, such as in the range of 2.5 wt.% to 5 wt.%, e.g. 3 wt.%, 3.5 wt.%, 4 wt.% and 4.5 wt.%. So the filling may comprise one or more of coated food acids and co-crystals of food acids, and combinations thereof.

According to some embodiments, the filling may comprise up to 15 wt. % of coated citric acid and/or coated malic acid, and may
- comprise up to 15 wt. % of co-crystal of malic acid and alkali metal malate; or
- be free of co-crystal of malic acid and alkali metal malate.

More preferred, the filling comprises more than or equal to 0.5 wt.% and less than or equal to 15 wt.% coated citric acid and/or coated malic acid, such as in the range of 1 wt.% to 10 wt.%, such as in the range of 1 wt.% to 5 wt.%, even in the range of 2 wt.% to 3 wt.%, e.g. 2 wt.%, 2.5 wt.%, and 3 wt.%.

More preferred, the filling comprises more than or equal to 0.1 wt.% and less than or equal to 15 wt.% co-crystal of malic acid and alkali metal malate, such as in the range of 0.1 wt.% to 12 wt.%, such as in the range of 0.1 wt.% to 7.5 wt.%, even in the range of 0.1 wt.% to 5 wt.%, such as in the range of 0.1 wt.% to 2.5 wt.%, e.g. 0.5 wt.%, 1 wt.%, 1.5 wt.%, 2 wt.%, and 2.5 wt.%.

According to some embodiments, the filling may further comprise tartaric acid.

It is advantageous to use tartaric acid as an ingredient in the filling of the filled wafer, as tartaric acid adds a sharp tang and can enhance the overall fruitiness of the filling.

According to some embodiments, the filling may comprise at maximum 2.5 wt.% tartaric acid.

In the European Union (EU) regulations, all food additives are identified by an E number, which means that the referred food additive has passed safety tests and has been approved for use, and its safety is evaluated before it can be permitted for use in food.

On 24 May 2024, the European Union (EU) has introduced conditions of use for tartaric acid and tartrates (E 334-337 and E 354) in many food categories, including "05.2 Other confectionery including breath freshening microsweets", according to Commission Regulation (EU) 2024/1451 as regards the food additives tartaric acid (L(+)-) (E 334), sodium tartrates (E 335), potassium tartrates (E 336), sodium potassium tartrate (E 337) and calcium tartrate (E 354). Suppliers of food containing tartaric acid (E 334) must comply with the new maximum levels set for each food category. Regarding the addition of tartaric acid in the filling of the filled wafer as described in this invention, the new level is maximum 25,000 mg/kg. The amount of added tartaric acid in the filling of the filled wafer as described in this invention complies with the EU regulations, while is sufficient enough to present flavor in the final product.

More preferred, the filling may comprise 0.5 wt.% to 2.5 wt.% tartaric acid, such as in the range of 0.75 wt.% to 2.5 wt.%, even in the range of 1 wt.% to 2.5 wt.%, such as in the range of 1.5 wt.% to 2.5 wt.%, e.g. 1.75 wt.%, 2 wt.%, 2.2 wt.%, and 2.4 wt.%.

According to some embodiments, the filled wafer may comprise an unleavened food sheet casing, said casing enclosing a filling.

The unleavened food sheet casing may comprise preferably two unleavened food sheets, each being referred to as a wafer. The combination of unleavened food sheet casing and the enclosed inner filling may be referred to as filled wafer or Flying saucers or UFOs. The unleavened food sheet casing has advantages over other possible packaging to some extend due to its good mouthfeel as described in the first aspect of the invention. The unleavened food sheet casing is crispy, crunchy, and have a less tendency to stick to the palate of the consumer. Its shape and size are specifically designed so that no plastic deformation occurs prior to a first crack or breaking point, and substantial little work is required to reach this first breaking point, resulting in a crispy texture when bitten.

The filled wafer may comprise 20 wt.% to 60 wt.% unleavened food sheets, such as in the range of 25 wt.% to 55 wt.%, even in the range of 30 wt.% to 50 wt.%, such as in the range of 35 wt.% to 45 wt.%, e.g. 37 wt.%, 40 wt.%, and 43 wt.%.

The filled wafer comprising an unleavened food sheet casing, said casing enclosing a filling is advantageous in the overall mouthfeel of the consumers. People like to experience variations when they eat. Either melting the filled wafer in the mouth or immediately biting down on the crispy unleavened food sheet casing, the consumers experience a first mouthfeel of tenderness or crispness. Right after that, a burst of sourness stimulates the palate, offering a sharp and tangy flavor. As time goes on, with each bite, the well-balanced sweetness and sourness leave a long lasting enjoyment.

According to the first aspect of the invention, the filled wafer may be provided in several steps.

Firstly, a plurality of unleavened food sheets and a filling are provided.

Secondly, a plurality of unleavened food sheets may be shaped into a cylindrical cap, surrounded by a flat rim. This form creates an indentation, preferably in the middle of the unleavened food sheet, for accommodating the filling.

Thirdly, the filling is filled to the indentation's concavity of the shaped unleavened food sheet.

Fourthly, a second shaped unleavened food sheet is directed to and adhered to the side of the first shaped unleavened food sheet where the concavity of the indentation is present. The second shaped unleavened food sheet has its side where the concavity of the indentation present facing the concavity of the indentation of the first unleavened food sheet, thereby creating a case made from two non-flat sides, the void between the indentations being maximally half filled with the filling. Two rims of two such shaped unleavened food sheets are connected to each other, such as through applying "eatable glue" in between the rims, or through wetting one or two sides of the rims and applying forces to close the casing.

The filled wafer comprising a filling is made with the method described above. In the manufacturing process, there may be one or more thermal treatment and drying treatment with controlled temperature, humidity and atmosphere over time.

At least one of the unleavened food sheet is shaped into a cylindrical cap, surrounded by a flat rim. As such a casing may be made having all non-flat sides, or having one non-flat side and one flat side.

According to some embodiments, the filling may comprise other ingredients chosen from the group consisting of sugars, starches, sweeteners, vitamins, minerals, buffer salts, dietary fibers, sodium carbonates, sodium hydrogenate carbonate, dextrose, maltodextrin and additives. So the filling may comprise one or more of sugars, starches, sweeteners, vitamins, minerals, buffer salts, dietary fibers, sodium carbonates, sodium hydrogenate carbonate, dextrose, maltodextrin and additives, and combinations thereof.

The sugars may comprise, but be not limited to, sugar cane, sugar beet, palm sugar and/or a combination of those. The sugars can be granulated sugar, grinded sugar, sanding sugar and powdered sugar, preferably being grinded sugar.

The filling may comprise 20 wt.% to 60 wt.% sugar, such as in the range of 25 wt.% to 55 wt.%, even in the range of 30 wt.% to 50 wt.%, such as in the range of 45 wt.% to 50 wt.%, e.g. 45 wt.%, 46 wt.%, 47 wt.%, and 50 wt.%.

The starches may comprise, but be not limited to, native starches, modified starches and/or a combination of those. Native starches may comprise wheat, maize, cassava/tapioca, rice, potato, pea, barley starches and/or a combination of those. Modified starches may comprise all chemically, enzymatically, or physically modified starches and/or a combination of those.

The filling may comprise 0.5 wt.% to 5 wt.% starch, such as in the range of 0.75 wt.% to 3 wt.%, even in the range of 1 wt.% to 3 wt.%, such as in the range of 1 wt.% to 2 wt.%, e.g. 1.25 wt.%, 1.5 wt.%, 1.75 wt.%, and 2 wt.%.

The sweeteners may comprise, but be not limited to, E420 (sorbitol), E421 (maltitol), E950 (aspartame), E951 (acesulfame K), E952 (cyclamate), E953 (isomalt), E954 (saccharin), E955 (sucralose), E957 (advantame), E960a, E960c, E960d (steviol glycosides), E965 (maltitol), E967 (xylitol), E968 (erythritol), E969 (thaumatin), allulose and/or a combination of those.

The vitamins may comprise, but be not limited to, E300 (ascorbic acid), E306, E307, E308, E309 (tocopherols), E101 (riboflavin), Folic acid, Cobalamin (Vitamin B12), Retinol (Vitamin A), Calciferol (Vitamin D), Vitamin K, Niacin (Vitamin B3), Thiamin (Vitamin B1), Biotin and/or a combination of those.

The minerals may comprise, but be not limited to, Magnesium, Iron, Calcium, Potassium, Zinc and/or a combination of those.

The buffer salts may comprise, but be not limited to, Sodium malate/citrate/lactate/tartrate, Magnesium malate/citrate/lactate/tartrate, Calcium malate/citrate/lactate/tartrate, Potassium malate/citrate/lactate/tartrate, Zinc malate/citrate/lactate/tartrate and/or a combination of those.

The dietary fibers may comprise, but be not limited to, Polydextrose, Oligofructose, Fructooligosaccharides (FOS), Galactooligosaccharides (GOS), Inulin, Cellulose and/or a combination of those.

The filling may further comprise E500 (Sodium carbonates), E500 (ii) (Sodium hydrogenate carbonate), Dextrose/Maltodextrin and/or a combination of those.

The filling may comprise 0.5 wt.% to 5 wt.% sodium bicarbonate, such as in the range of 0.75 wt.% to 3 wt.%, even in the range of 1 wt.% to 3 wt.%, such as in the range of 1 wt.% to 2 wt.%, e.g. 1.3 wt.%, 1.5 wt.%, 1.7 wt.%, and 1.9 wt.%.

The filling may further comprise other additives comprising emulsifier, colorants, such as carbon black, aromas, releasing agents (E 551) and/or a combination of those.

It is advantageous to use multiple ingredients in the filling. A good mix and balance of multiple ingredients increases the complexity of the consumer's taste. In addition, the addition of vitamins, minerals and dietary fibers adds extra nutritional value of nutrition to this type of popular sweets, which can keep up with the social trend of pursuing healthier eating habits and lifestyles. Moreover, the addition of other additives within a safe range helps the production, transportation, and preservation of the product in the factory, in the market and with customers.

According to some embodiments, the filled wafer may be a confectionery product.

The filling of the filled wafer as described in this invention is preferably used as an ingredient of a confectionery product. The filled wafer is preferably a confectionery product.

According to a second aspect of the invention, one or more food acids chosen from the group consisting of coated food acids and co-crystals of food acids is used as ingredient of a filling of a filled wafer, hence, to provide filled wafer according to the first aspect of the invention.

In other words, the use of coated food acids and co-crystals of food acids and a combination thereof may be as ingredient(s) of a filling of a filled wafer. The filling is preferably used as the ingredient enclosed in the unleavened food casing (the wafers). The filling can also be used as the coating of soft or hard candy.

According to a third aspect of the invention, the invention relates to a method to provide a filled wafer, comprising the steps of:
- providing two or more parts of unleavened food sheet casing;
- providing a filling comprises one or more food acids, at least one of said one or more food acids is a coated food acid or a co-crystal of food acids; and
- converting the two or more parts of unleavened food sheet casing and the filling into a filled wafer.

Hence, the method according to the third aspect of the invention may provide filled wafer according to the first aspect of the invention.

The method to provide a filled wafer may comprise several steps. Firstly, two or more parts of unleavened food sheet casing are provided. The unleavened food sheet casing may comprise at least two parts, each being an unleavened food sheet. The unleavened food sheet may have a flat or preferably is made to have a non-flat shape. The non-flat unleavened food sheet presents as a cylindrical cap with an indentation and a flat rim surrounding the indentation. The indentation is made to be preferably in the middle of the unleavened food sheet. The concavity formed by the indentation is adapted to accommodate the filling. The unleavened food sheet casing is made from batter or dough mainly comprising starch, water, optionally colorants, optionally aromas, preferably sugarless and other additives. The thickness of the unleavened food sheet may range from 0.25 mm to 2.5 mm, preferably from 0.5 mm to 2 mm, even preferably from 0.9 mm to 1.1 mm, e.g. 1 mm. The unleavened food sheets, also referred to as "wafer", are generally inelastic and crumbly.

Secondly, a filling comprising one or more food acids, at least one of said one or more food acids being a coated food acid or a co-crystal of food acids is provided. Coated citric acid and/or coated malic acid, and/or a co-crystal of food acids of malic acid and alkali metal malate and/or a co-crystal of food acids of malic acid and alkali metal hydrogen malate is/are added to the filling. Other ingredients, chosen from the group consisting of sugars, starches, sweeteners, vitamins, minerals, buffer salts, dietary fibers, sodium carbonates, sodium hydrogenate carbonate, dextrose, maltodextrin and additives may be further added to the filling. So the ingredients may comprise one or more of sugars, starches, sweeteners, vitamins, minerals, buffer salts, dietary fibers, sodium carbonates, sodium hydrogenate carbonate, dextrose, maltodextrin and additives, and combinations thereof.

The above ingredients are mixed uniformly in a certain proportion to obtain a uniform powder mixture with low hygroscopicity, high humidity stability and low segregation degree.

The ingredients may be added to the filling in one step or in several steps. The mixing is preferably to be dry mixing, such as using convection technology, using diffusion technology, and using high-shear mixing.

Thirdly, the two or more parts of unleavened food sheet casing and the filling are converted into a filled wafer. The filling is distributed to the concavity of the indentation of a first unleavened food sheet. The amount of the filling, in terms of weight or volume, can be customized according to varied needs. A second unleavened food sheet may be adhered to the side of the first shaped unleavened food sheet where the concavity of the indentations is present, thereby forming a unleavened food sheet casing enclosing the filling. The adhesion between the two unleavened food sheet can be realized by applying "eatable glue" to the interface in between the two unleavened food sheets, or by wetting the interface in between the two unleavened food sheets and applying forces. The two unleavened food sheet can be at least one non-flat.

The above described method is used to provide the filled wafer.

It is clear that one or more features of one of the aspects of the invention may be construed with one, more or all aspects of one or more other aspects of the invention.

### Brief Description of the Drawings

Some example embodiments will now be described with reference to the accompanying drawings.
Fig. 1 is a side view of a filled wafer according to the invention;
Fig. 2 is a top view of a filled wafer according to the invention;
Fig. 3 is a side view of a filled wafer with a cross section A-A' showing the filling of the filled wafer.

In the different figures, identical references/signs refer to the same or a similar feature.

### Detailed Description of Embodiment(s)

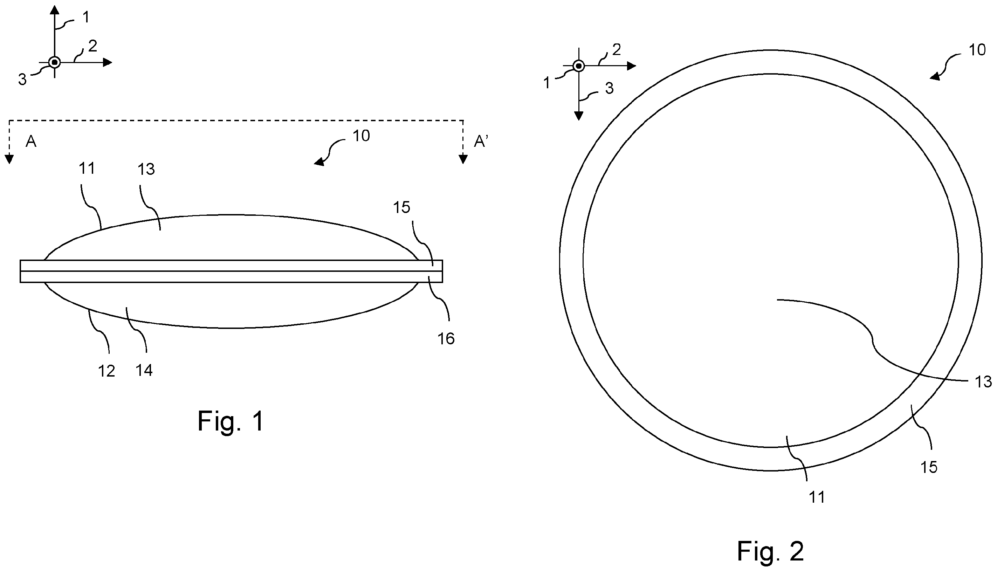

Fig. 1 illustrates schematically a filled wafer 10 according to the present invention. Fig. 2 presents a top-view of the filled wafer 10. The filled wafer 10 as illustrated in Fig. 1, Fig. 2, and Fig. 3 is a confectionary product.

Axes 1, 2 and 3 are orthogonal to each other and indicate the directions from which the filled wafer 10 according to the present invention is observed. Axis 2 is the longitudinal direction of the filled wafer, axis 1 is the transverse direction of the filled wafer, and axis 3 is a third direction transverse to axis 1 and axis 2.

The filled wafer 10 is a small spheroidal capsule of filled unleavened food sheet casing. Each filled wafer 10 comprises an unleavened food sheet casing and the casing encloses a filling 20. In general, the casing of the filled wafer may comprise more than one unleavened food sheets, e.g. two, three, four or oven more. As in this embodiment, the casing of the filled wafer is provided by two unleavened food sheets 11, 12. At least one of the unleavened food sheets, in this embodiment both unleavened food sheets 11, 12 are shaped into a non-flat shape, being a cylindrical cap surrounded by a flat rim 15, 16. So the unleavened food sheet 11, 12 comprise an indentation 13, 14 forming a concavity to accommodate the filling 20.

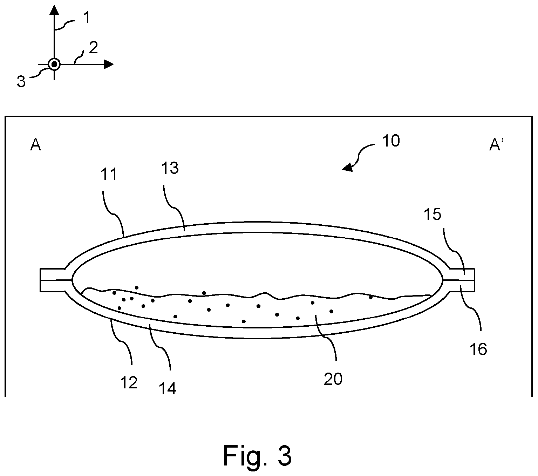

As shown in Fig. 1 and Fig. 2, the second shaped unleavened food sheet 11 is directed to and adhered to the side of the first shaped unleavened food sheet 12 where the concavity of the indentation 14 is present. The second shaped unleavened food sheet 11 has its side where the concavity of the indentation 13 present facing the concavity of the indentation 14 of the first unleavened food sheet 12, thereby creating a casing made from two non-flat sides, the void between the indentations 13, 14 being maximally half filled with the filling 20. The status of the filling 20 in the unleavened food sheet casing is illustrated in Fig. 3 as viewed from the A-A' cross section in Fig. 1.

Two rims 15, 16 of two such shaped unleavened food sheets 11, 12 are attached to each other, such as through applying "eatable glue" in between the rims 15, 16, or through wetting one or two sides of the rims 15, 16 and applying forces to close the casing.

However, it is envisaged that alternative flat unleavened food sheet 11, 12 could be used. It is also envisaged that alternative concavity 13, 14 of the unleavened food sheet 11, 12 could be used, such as rectangular, square, spherical, prolate spheroidal shape and so on. It is also envisaged that the unleavened food sheet 11, 12 can have alternative sizes, including the size of the concavity 13, 14, the size of the flat rim 15, 16 and so on. The concavity 13, 14 formed by the indentation is preferably located at the center of the unleavened food sheet 11, 12, but the concavity 13, 14 may also be located at a position deviated from the center of the unleavened food sheet 11, 12.

The filled wafer 10 as illustrated in Fig. 1, 2 and 3 may comprise the filling 20 with ingredients as listed in Table I.

It is envisaged that the exact weight percentage of each ingredient can be varied depending on the requirements of each batch of product. The total weight percentage, i.e. the sum of the weight percentages of each ingredient, is calculated as 100%. Three examples of such filled wafer 10, the shape also known as UFO's, are given in table I.

**Table I**

| Ingredients | Example 1 | Example 2 | Example 3 |
|---|---|---|---|
| Unleavened food sheets 11 and 12 | 7.7-47.7 wt.% | 7.7-49 wt.% | 6.7-49 wt.% |
| Sugar | 45-47 wt.% | 44-47 wt.% | 44-48 wt.% |
| Dextrose | 0-10 wt.% | 0-10 wt.% | 0-10 wt.% |
| Tartaric acid | 1.5-2.5 wt.% | 1.5-2.5 wt.% | 1.5-2.5 wt.% |
| Co-crystal of malic acid and disodium malate | 0.5-15 wt.% | 0.1-15 wt.% | 0.1-15 wt.% |
| Coated citric acid | 2.5-15 wt.% | 2.6-15 wt.% | 2.6-15 wt.% |
| Balance: other additives | | | |

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A filled wafer (10) comprising a filling (20), said filling (20) comprises one or more food acids, at least one of said one or more food acids is a coated food acid or a co-crystal of food acids.

2. A filled wafer (10) according to claim 1, wherein said one or more food acids comprises coated citric acid and/or coated malic acid.

3. A filled wafer (10) according to any one of the preceding claims, wherein said one or more food acids comprises coated citric acid and coated malic acid.

4. A filled wafer (10) according to any one of the preceding claims, wherein said one or more food acids comprises a co-crystal of food acids of malic acid and alkali metal malate and/or a co-crystal of food acids of malic acid and alkali metal hydrogen malate.

5. A filled wafer (10) according to any one of the preceding claims, wherein said one or more food acids comprises:
- a co-crystal of malic acid and sodium hydrogen malate; and/or
- a co-crystal of malic acid and bis(potassium hydrogen L-malate); and/or
- a co-crystal of dipotassium tetrahydrogen trimalate; and/or
- a co-crystal of malic acid and disodium malate.

6. A filled wafer (10) according to any one of the preceding claims, wherein said filling (20) comprises at least 0.5 wt. % of food acids chosen from the group consisting of coated food acids and co-crystals of food acids.

7. A filled wafer (10) according to any one of the preceding claims, wherein said filling (20) comprises up to 15 wt. % of coated citric acid and/or coated malic acid, and
- comprises up to 15 wt. % of co-crystal of malic acid and alkali metal malate; or
- is free of co-crystal of malic acid and alkali metal malate.

8. A filled wafer (10) according to any one of the preceding claims, wherein said filling (20) further comprises tartaric acid.

9. A filled wafer (10) according to claim 8, wherein said filling (20) comprises at maximum 2.5 wt.% tartaric acid.

10. A filled wafer (10) according to any one of the preceding claims, wherein said filled wafer (10) comprises an unleavened food sheet casing, said casing enclosing a filling (20).

11. A filled wafer (10) according to any one of the preceding claims, wherein said filling (20) comprises other ingredients chosen from the group consisting of sugars, starches, sweeteners, vitamins, minerals, buffer salts, dietary fibers, sodium carbonates, sodium hydrogenate carbonate, dextrose, maltodextrin and additives.

12. A filled wafer (10) according to any one of the preceding claims, wherein the filled wafer (10) is a confectionery product.

13. The use of one or more food acids chosen from the group consisting of coated food acids and co-crystals of food acids as ingredient of a filling (20) of a filled wafer (10).

14. A method to provide a filled wafer (10), comprising the steps of:
- providing two or more parts of unleavened food sheet casing;
- providing a filling (20) comprises one or more food acids, at least one of said one or more food acids is a coated food acid or a co-crystal of food acids; and
- converting the two or more parts of unleavened food sheet casing and the filling (20) into a filled wafer (10).
